# EUROPEAN PATENT APPLICATION

(11) **EP 2 990 190 A1**
(43) Date of publication of application: **02.03.2016**
(21) Application number: 15181543.8
(22) Date of filing: 19.08.2015
(51) Int. Cl.: B29D 30/34

(54) **PLY MAKING APPARATUS AND METHODS FOR TIRE MANUFACTURING**

(30) Priority: 28.08.2014 US 201462042959 P; 28.08.2014 US 201462042976 P
(71) Applicant: The Goodyear Tire & Rubber Company, Akron, Ohio 44316 (US)
(72) Inventor: ROYER, Thierry, B-6700 Arlon (BE); WINKIN, Didier, B-6600 Bastogne (BE); MONHONVAL, Benjamin, B-6730 Bellefontaine (BE); DEBRAS, Michael, L-7513 Mersch (LU); MAUS, Peter Cornelius, B-4760 Bullingen (BE)
(74) Representative: Kutsch, Bernd

(57) **Abstract**

A ply making apparatus (100) is disclosed comprising: a support frame (110); a rotatable member (200) mounted to the support frame, wherein the rotatable member further includes a spool mechanism (300) for winding a strip of ply (20); and a first (440A) and second (400B) bead support holder located adjacent each other, wherein the second bead holder is configured to hold a second bead (B) and the first bead support holder is configured to support a first bead (A) in parallel relationship and axial alignment with respect to the second bead held by the second bead holder. The rotatable member (200) is positionable inside each bead (A), (B). Also, methods of making a tire carcass and a tire are disclosed.

## Description

### Field of the Invention

The invention relates generally to tire manufacturing, and, more specifically, to an apparatus and method for making a tire carcass and a tire.

### Backaround of the Invention

A tire carcass is typically made from two or more layers of ply. The tire ply is typically laid onto a tire building drum in the form of a sheet of ply having ends that are spliced together on the drum. A pair of annular beads are set onto each lateral end of the sheet of ply. Tire components are then added, and the tire building machine typically radially expands and axially contracts while using inflatable bladders to turn up the ply ends, resulting in a torus shaped carcass. The ply endings are typically located in the lower sidewall area of the tire, near the bead. The conventional ply construction due to the location of ply endings can result in reduced bead durability. Another disadvantage of conventional tire ply construction is unequal carcass tension which can result in toe lifting of the bead. Thus, a new and improved tire design with improved bead durability is desired. An endless tire ply construction is disclosed, that has no ply endings. Because there is no ply ending, the tire has better durability particularly in the bead area. The endless tire ply results in equal carcass tension on both bead sides, resulting in better bead seating.

### Summary of the Invention

The invention relates to a ply making apparatus in accordance with claim 1, to a method of making a tire carcass in accordance with claims 10, 11 or 14, and to a method of making a tire in accordance with claim 15.

Dependent claims refer to preferred embodiments of the invention.

The invention provides in a first aspect a ply making apparatus for use in the making of a tire carcass, the ply making apparatus comprising a support frame, a rotatable member mounted to the support frame, wherein the rotatable member further includes a spool mechanism for winding a strip of ply, and a first and second bead support holder located adjacent each other, wherein a first bead support holder supports a first bead in parallel relationship and axial alignment with respect to a second bead held by a second bead holder, wherein the rotatable member is positioned to rotate inside each bead.

In a preferred aspect of the invention, the rotatable member is C shaped. It may have a removable bridge for bridging a gap of the C shaped member.

In a preferred aspect of the invention, each bead holder is configured to rotate its respective bead, preferably in synchronization with the rotation of the opposite respective bead of the other bead holder.

In one aspect of the invention, the rotatable member may be configured to be rotated so that it is inside each bead. In another aspect of the invention, the rotatable member may be configured to be rotated so that it is not inside each bead.

In a preferred aspect of the invention, the support frame has an upper portion and a lower portion, wherein the upper portion is slidable in a first direction relative to the lower portion. Preferably, the rotatable member is mounted to the upper portion.

In a preferred aspect of the invention, the rotatable member further comprises a second spool mechanism.

In a preferred aspect of the invention, each bead holder is slidably mounted in a second direction wherein the second direction is transverse to the first direction.

In a preferred aspect of the invention, each bead holder has a C shaped member. The C shaped member is preferably configured such that it does not rotate.

In a preferred aspect of the invention, each bead holder has one or more actuators with each actuator being slidable in a radial direction.

In a preferred aspect of the invention, the actuator is a shoe slidable in the radial direction. The shoe preferably further includes a rotatable wheel or a rotatable wheel driven by a belt.

The invention provides in a second aspect a method of making a tire carcass, the method comprising the steps: providing a first and second bead, at least one or both of the beads optionally comprising an apex; aligning the first and second bead in parallel relationship to each other and aligning the centers of each bead on a central axis; and winding a strip of ply about the first and second bead so that the strip of ply extends between the beads in parallel relationship to the central axis forming a first stage tire carcass having two layers of ply. The method may further comprise the step of shaping the first stage tire carcass into a toroid.

The invention provides in a third aspect a method of making a tire carcass, the method comprising the steps: providing a rotatable member mounted to a support frame, wherein the rotatable member further comprises a spool of ply strip; providing a first and second bead located adjacent the rotatable member wherein the first and second beads are placed in parallel relationship and axial alignment with respect to each other; rotating the rotatable member through and around the first and second bead while winding the strip of ply around and through the opposed beads.

In a preferred aspect of the invention, these methods further comprise the step of rotationally indexing the first and second bead, or rotationally indexing the first and second bead while winding the strip of ply.

In a preferred aspect of the invention in accordance with these methods, the rotatable member is C shaped.

The invention provides in a fourth aspect a method of making a tire carcass, the method comprising the following steps: a) providing a first and second bead having axially outer edges; b) aligning the first and second bead in parallel relationship to each other, and aligning the centers of each bead on a central axis; c) winding a strip of ply about the axially outer edge of the first bead, then extending the strip of ply in the axial direction towards the second bead, wrapping the strip around the axially outer edge of the second bead, and then extending the strip of ply in the axial direction towards the first bead to form a first winding; d) rotationally indexing the first and second bead in unison, and e) winding the strip of ply in a second winding as described in step c), wherein the second winding is located adjacent the first winding.

The invention provides in a fifth aspect a method of making a tire, the method comprising the steps: a) providing a first and second bead; b) aligning the first and second bead in parallel relationship to each other, and aligning the centers of each bead on a central axis; c) winding a strip of ply about the first and second bead so that the strip of ply extends between the beads in parallel relationship to the central axis; d) rotationally indexing the beads in unison; e) repeating steps c and d until a first stage tire carcass having two layers of ply is formed; f) forming the first stage tire carcass into a torus shaped carcass; g) applying a belt layer and tread to form a tire; h) vulcanizing the tire in a mold. Preferably, steps d) and e) are repeated until a first stage tire carcass having two layers of ply is formed.

The invention provide in a sixth aspect a tire made using one of the methods in accordance with the invention.

### Definitions

"Carcass" means the supporting structure of the tire consisting of plies anchored to the bead on one side and running in a radius to the other side and anchoring to the bead. Also called casing. "First stage carcass" means the tire carcass formed in a cylindrical shape.

"Circumferential" means lines or directions extending along the perimeter of the surface of the annular tread perpendicular to the axial direction.

"Lateral" means an axial direction.

"Radial" and "radially" means in a direction towards or away from the center of the bead.

### Brief Description of the Drawings

The invention will be described by way of example and with reference to the accompanying drawings in which:
Figure 1 is a perspective view of a ply winding apparatus and two bead holder mechanisms.
Figure 2 is a perspective view of a partially formed carcass of the present invention.
Figure 3 is a perspective view of a formed carcass of the present invention.
Figure 4 is a perspective view of the ply winding apparatus and bead holder mechanisms during the forming of a carcass.
Figure 5 is a perspective view of a spool mechanism.
Figure 6 is a top view of the spool mechanism of Figure 5.
Figure 7 is a side cross sectional view of the spool mechanism of Figure 5, in the direction C-C.
Figure 8 is a perspective view of the support frame and rotatable member.
Figure 9 is a top view of the support frame and rotatable member of Figure 8.
Figure 10 is a side view of Figure 9.
Figure 11 is a side view of a first side of a bead support mechanism.
Figure 12A is a side view of a second side of the bead support mechanism of Figure 11, shown with the cover and bead holder mechanisms removed.
Figure 12B is a top view of Figure 12A.
Figure 13A is a side view of Figure 12A.
Figure 13B is a close-up view of the circle of Figure 13A.
Figure 14A is a perspective view of a bead holder unit.
Figure 14B is perspective rear view of the bead holder unit of Figure 14A.
Figure 14C is a top view of the bead holder unit of Figure 14A.
Figure 14D is a side view of the bead holder unit of Figure 14C.
Figure 14E is a bottom view of the bead holder unit of Figure 14C.
Figure 14F is a section view in the direction of 14F-14F of Figure 14E.
Fig 14G is a section view in the direction of 14G-14G of Figure 14E.

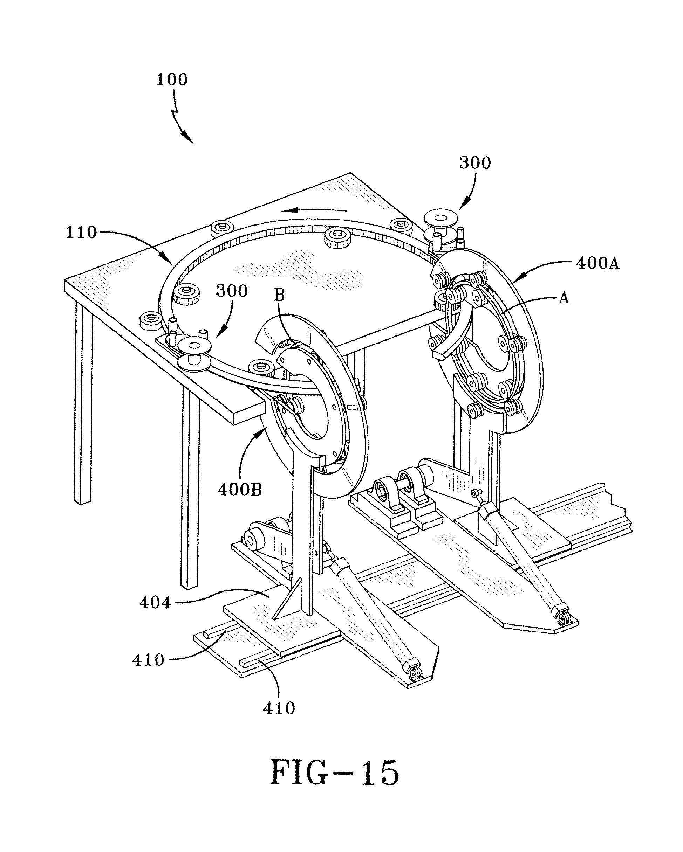

Figure 15 illustrates a simplified schematic of the ply wrapper apparatus during rotation of the rotatable member.

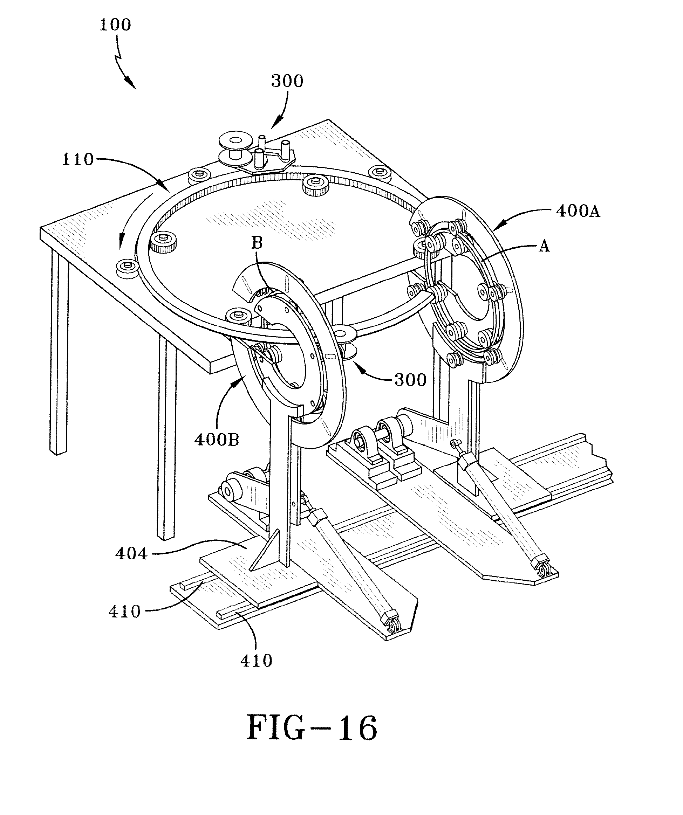

Figure 16 illustrates the ply wrapper apparatus of Figure 15 wherein the rotatable member is advanced.

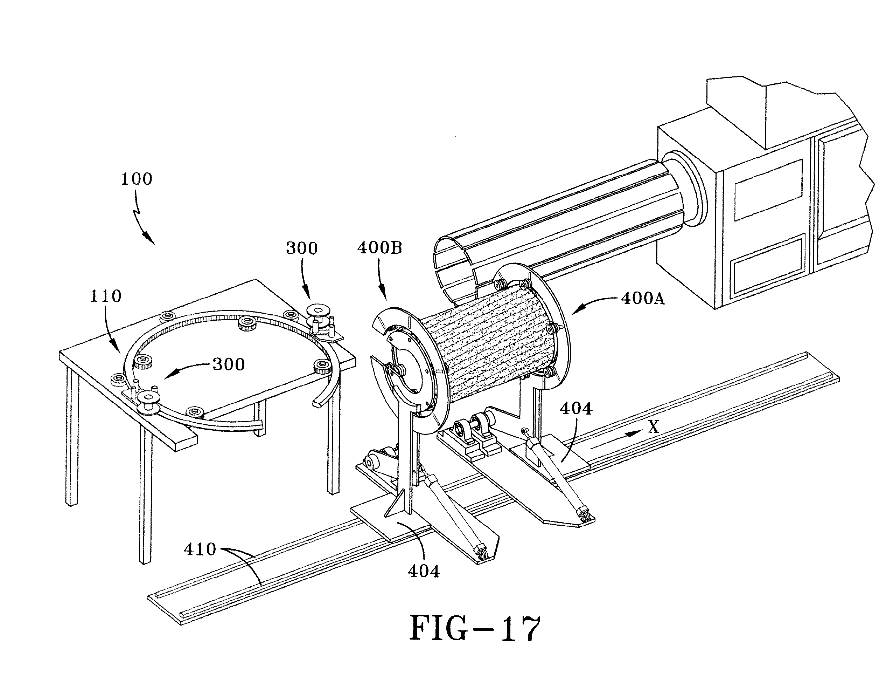

Figure 17 is a perspective view of the first stage tire carcass being transported by the bead holder units to a second stage tire machine.

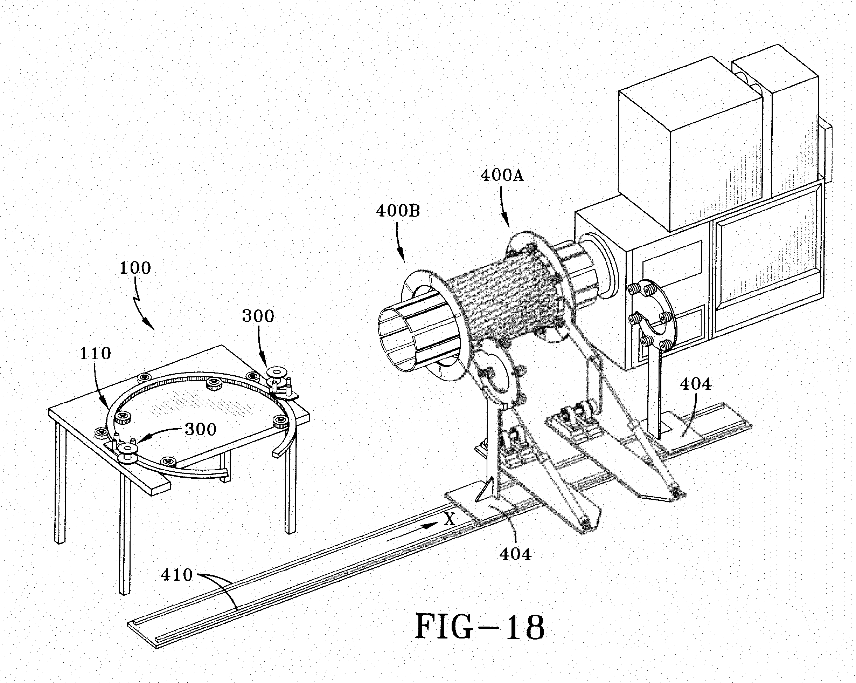

Figure 18 illustrates the first stage tire carcass being placed on the drum of the second stage tire machine.
Figure 19 illustrates a schematic of the motion of the ply as it is being wrapped around the beads A, B.
Figure 20 illustrates the cross-sectional view of the carcass being formed.
Figure 21A illustrates a perspective view of the rotatable member.
Figure 21B illustrates a perspective view of the rotatable member shown with the bridge removably mounted to the rotatable member.

### Detailed Description of Example Embodiments of the Invention

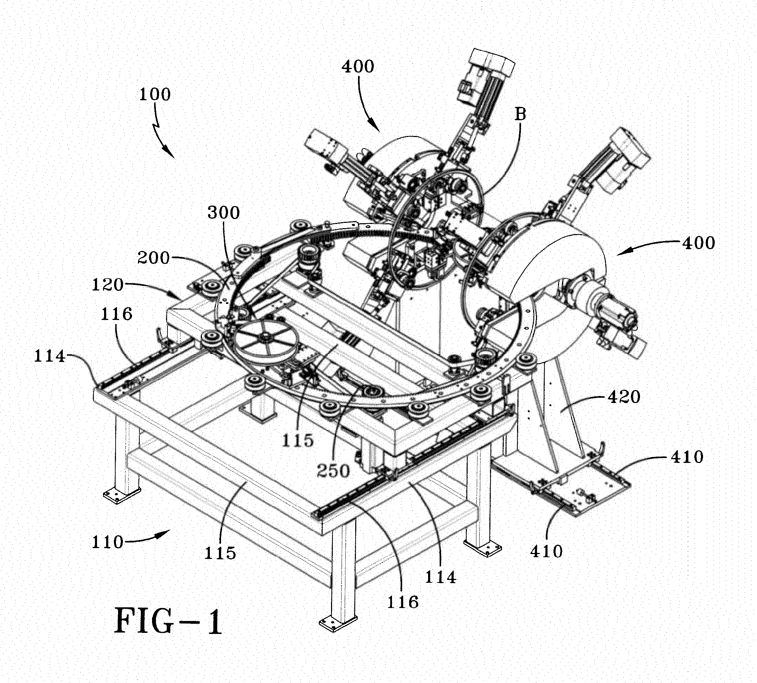

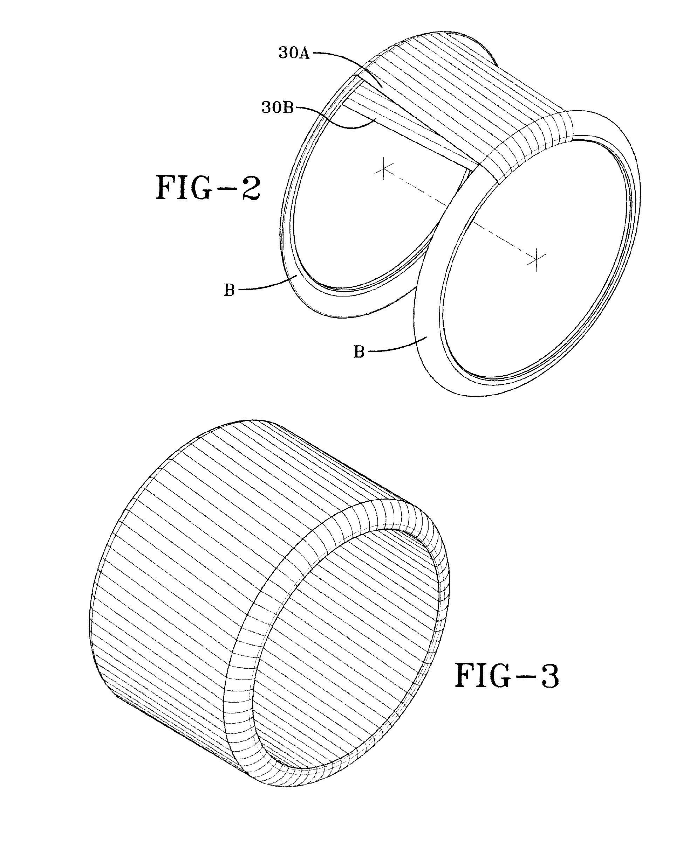

Figure 1 illustrates a first embodiment of a ply winding apparatus 100 useful for making a tire carcass. A ply strip is wound by the ply winding apparatus 100 around two parallel and spaced apart annular bead cores. The bead core may include an apex attached thereto, so that the ply strip is wound about the bead core and an optional apex. Figure 2 illustrates the parallel and spaced apart annular beads 101, shown with a narrow strip of ply 102 that has been wrapped around the outer edges of each bead in a continuous manner until at least one layer of ply has been formed as shown in Figure 3, forming a cylindrically shaped first stage carcass.

### Support Frame

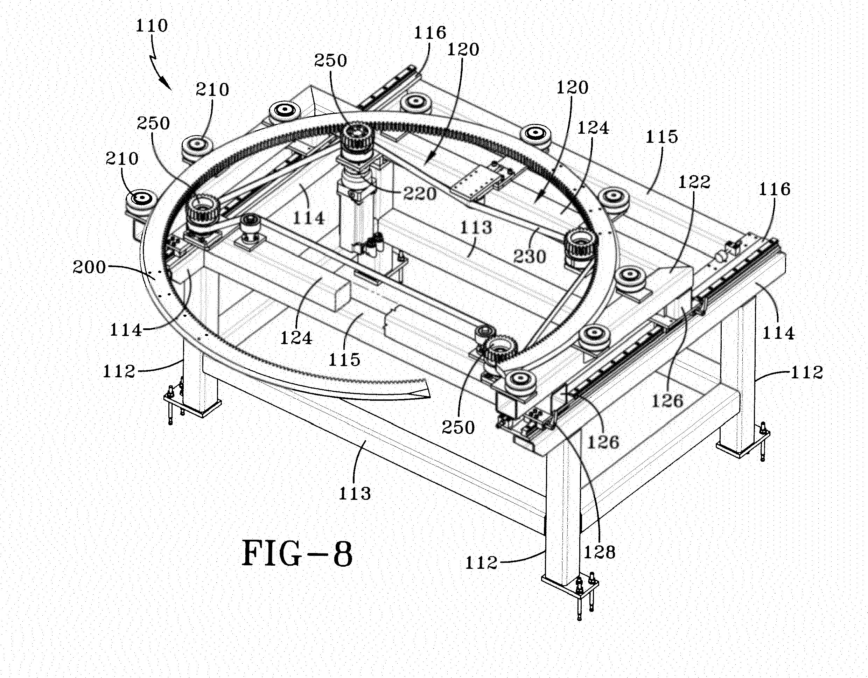

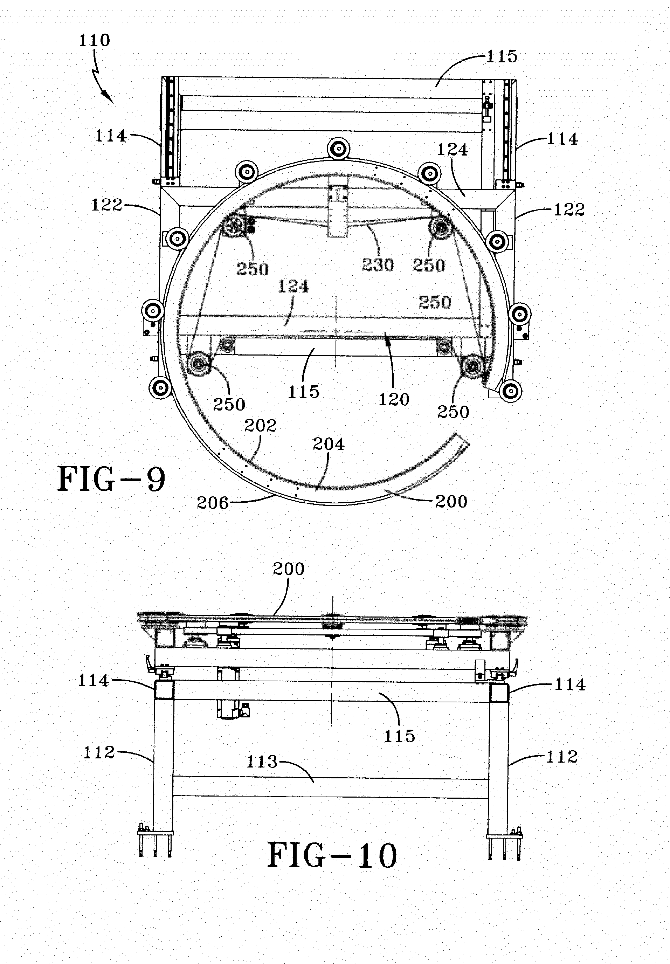

The ply winding apparatus 100 as shown in Figure 1, includes a rectangular stationary support frame 110. As shown in Figures 8-10, the stationary support frame 110 has a plurality of support legs 112 that may be rigidly mounted to the ground. The support legs are joined together by cross-members 113. The upper portion of the stationary support frame has two sets of opposed, parallel rails 114,115 forming a rectangular support. A linear track 116 is mounted on the two opposed parallel rails 114. A slidable support frame 120 is slidably mounted on the two opposed rails 114 of the stationary support frame 110. The slidable support frame 120 is rectangular in shape formed of two sets of opposed, parallel rails 122, 124. Support legs 126 extend from rails 124. The support legs have feet 128 which are configured to slide on linear tracks 116.

### Rotatable Member

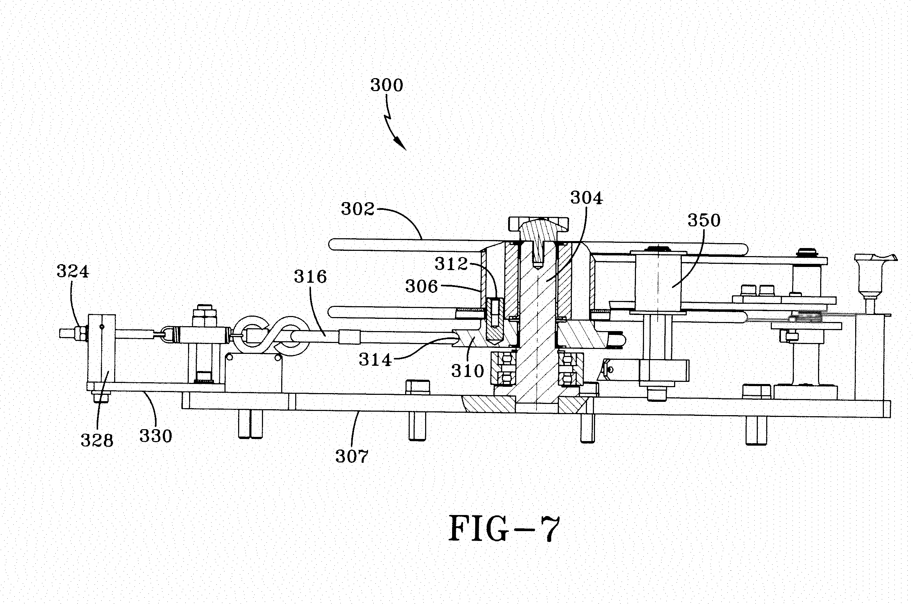

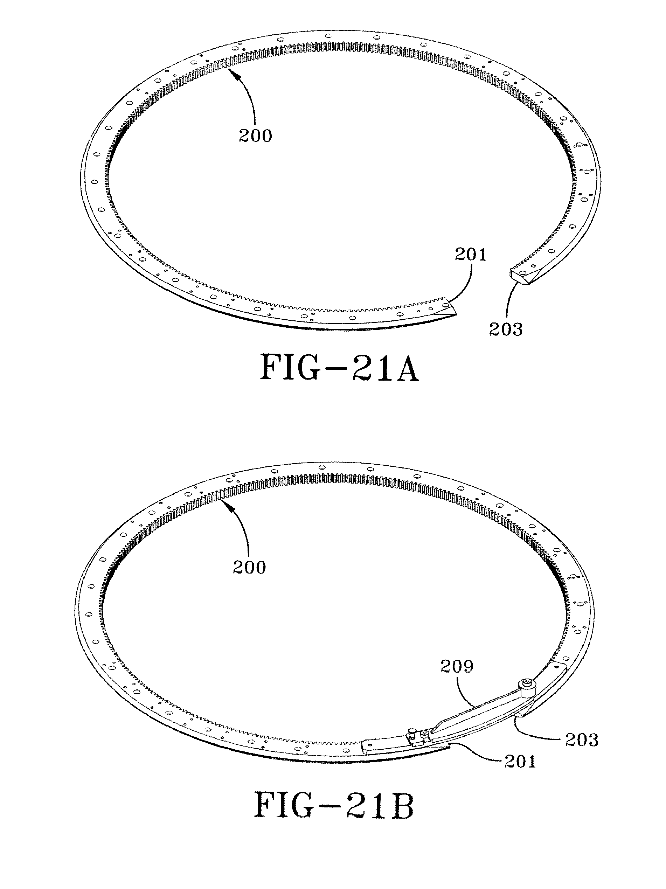

A rotatable member 200 is rotatably mounted to the slidable support frame 120. As shown in Fig. 21A, the rotatable member 200 may comprise a gear mechanism with gear teeth 202 located on the inner periphery 204 or the outer periphery 206. The rotatable member 200 may be a partial circle, of about 340-350 degrees, but preferably less than 360 degrees. Preferably the rotatable member is C shaped. A bridge 209 joins the ends 201, 203 together to form an annular member. The bridge 209 is removably mounted to the rotatable member 200. A plurality of guide bearings 210 are located about the rotatable member 200, and are shown in Figure 7 on the outer periphery of the rotatable member 200. At least one drive mechanism 220 for driving a belt 230 is used to rotate the rotatable member. Belt 230 is mounted about a plurality of gears 250. Rotation of the belt 230 by drive mechanism 220 rotates the rotatable member 200 in a circle of 360 degrees or less.

### Spool Mechanism

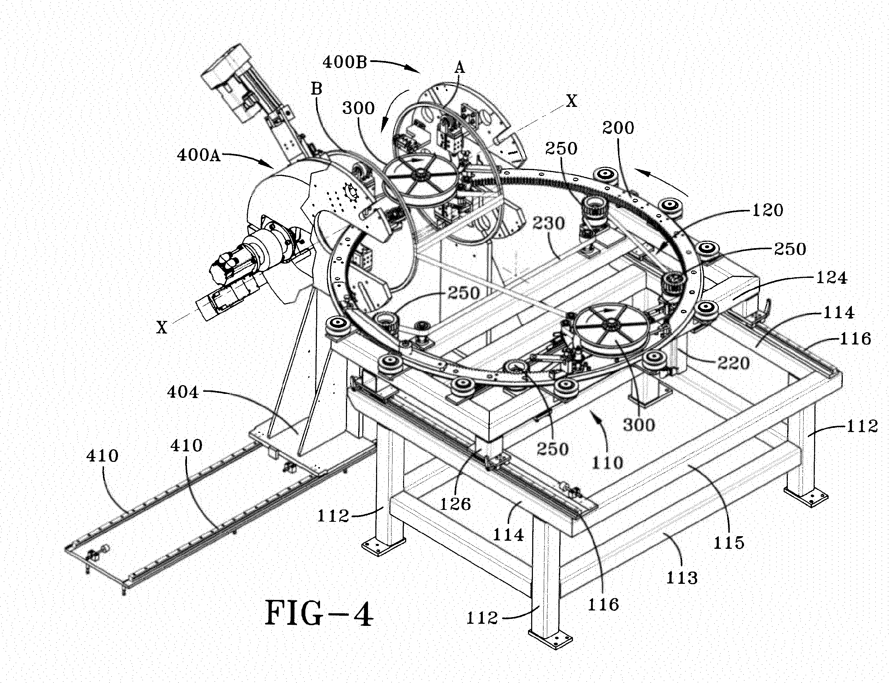

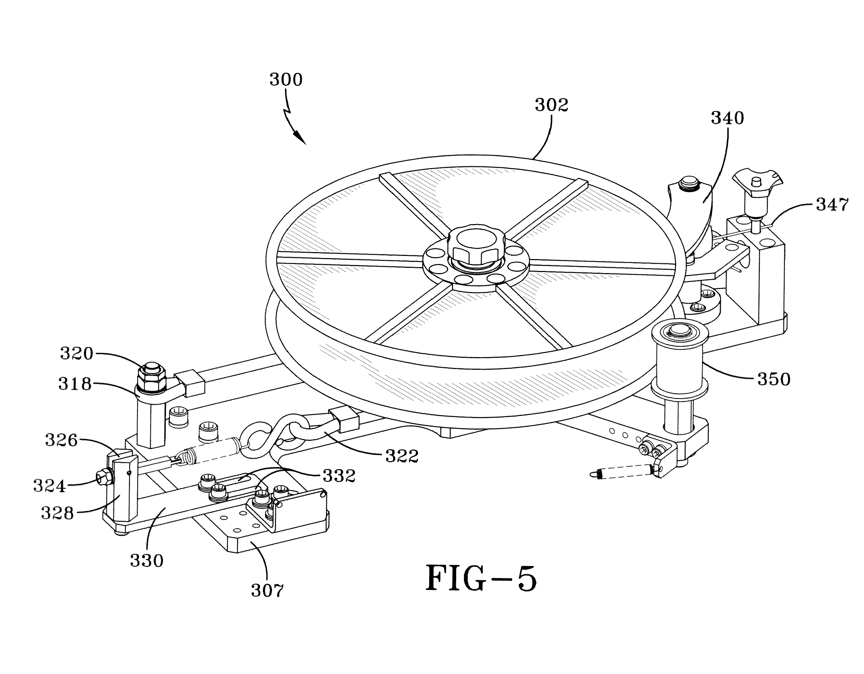

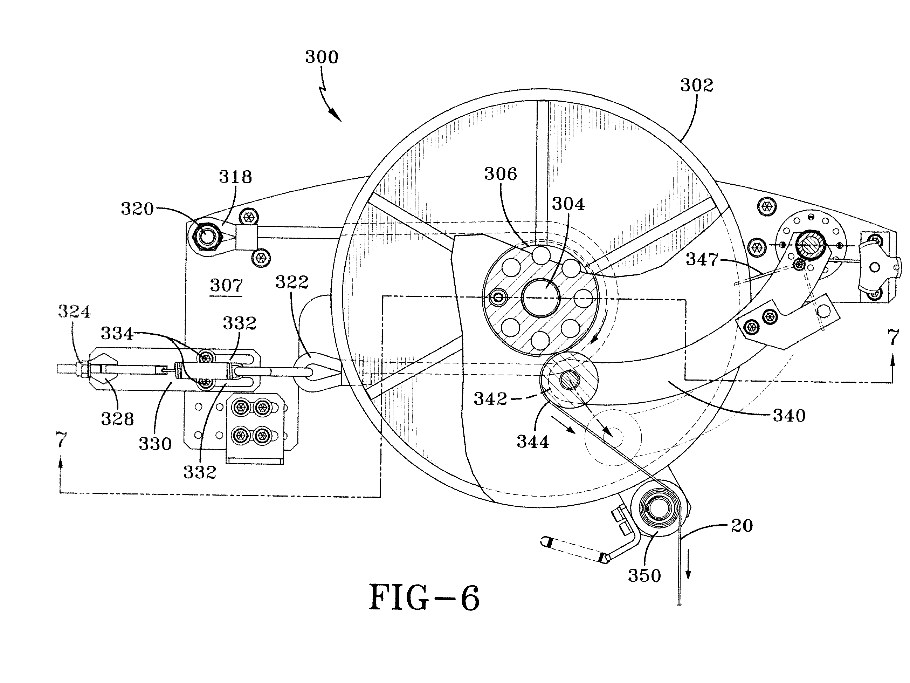

The rotatable member 200 further includes at least one spool mechanism 300 as shown in Figures 5-7. The spool mechanism 300 stores a spool 302 of ply strips and includes a mechanism for maintaining the tension of the ply strip. As shown in Figure 4, two spool mechanisms 300 may be used, and are preferably located opposite from each other. The spool mechanisms 300 each include a spool 302 rotatably mounted about a spindle 304. As shown in Figure 5, the spindle is mounted to a support plate 307. The spool has an inner hub 306 for winding a strip of ply. The strip of ply is formed of a strip of green rubber having one or more parallel reinforcement cords embedded therein. The cords may be steel, polyester, or other material. The strip is typically 6.35 mm (0.25 inches) to 19.05 mm (0.75 inches) wide.

As shown in figure 7, the inner hub 306 is secured to an annular disk 310 with one or more fasteners 312. The annular disk has an annular groove 314 that has a cable 316 received therein. The cable is wrapped around the annular disk and has a first end 318 secured to the support plate 307 via a fastener 320. The cable has a second end 322 that is secured to the support plate 307 via a fastener 324. The fastener 324 is received in a slot 326 of support member 328. The support member 328 is mounted on an adjustable plate 330. The adjustable plate 330 has two elongated slots 332 for receiving fasteners 334 therein. The adjustable plate position allows the adjustment of the tension of the cable about the annular groove of the annular disk. The higher the cable tension, the less the rotatable spool can rotate. The spool needs to be able to rotate sufficiently to allow the ply strip to unwind in a controlled manner and maintain a tension sufficient to allow the winding of the ply strip around the beads.

The spool mechanism may further include a tension arm 340. The tension arm has a distal end 342 having a roller 344 thereon for engaging the ply stock in the spool. The tension arm maintains tension on the ply strip stock via spring 347 to ensure the ply strip does not unwind from the spool. The spool mechanism further includes a roller guide 350 for guiding the path of the ply strip.

### Bead Support Mechanisms

The apparatus 100 further includes two bead support mechanisms 400. As shown in Figure 4, each bead support mechanisms 400A, 400B support a bead in parallel relationship a specified distance apart. Each bead support mechanism A, B are structurally the same, except that their mechanical components are reversed with respect to orientation, such that they are mirror images of each other. The bead support mechanism 400A shown in the right hand side of Figure 4 is as described below. It is to be understood that the bead support mechanism 400B is structurally the same.

### Rotatable Bead Holders

The bead support mechanism 400A includes a base support plate 404. The base support plate 404 has a lower surface 406 with two opposed and parallel support mounts 408 for mounting on opposed, parallel rails 410. The bead support mechanisms 400A, 400B are mounted on the parallel rails, so that the entire bead support mechanism 400A, 400B can translate laterally along a direction X. A support stand 420 is connected to the base support plate. The support stand 420 may be generally upright or perpendicular to the base support plate.

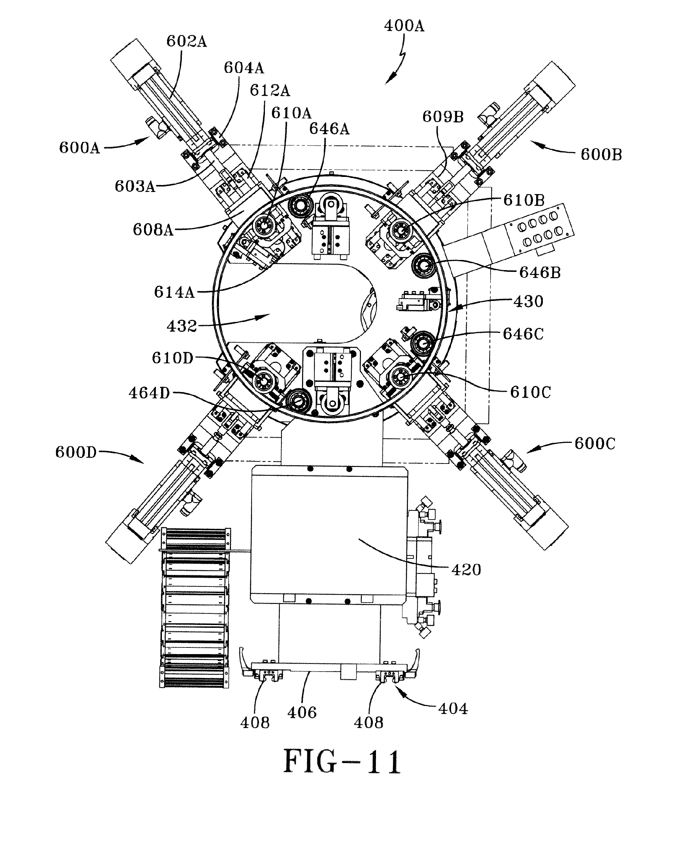

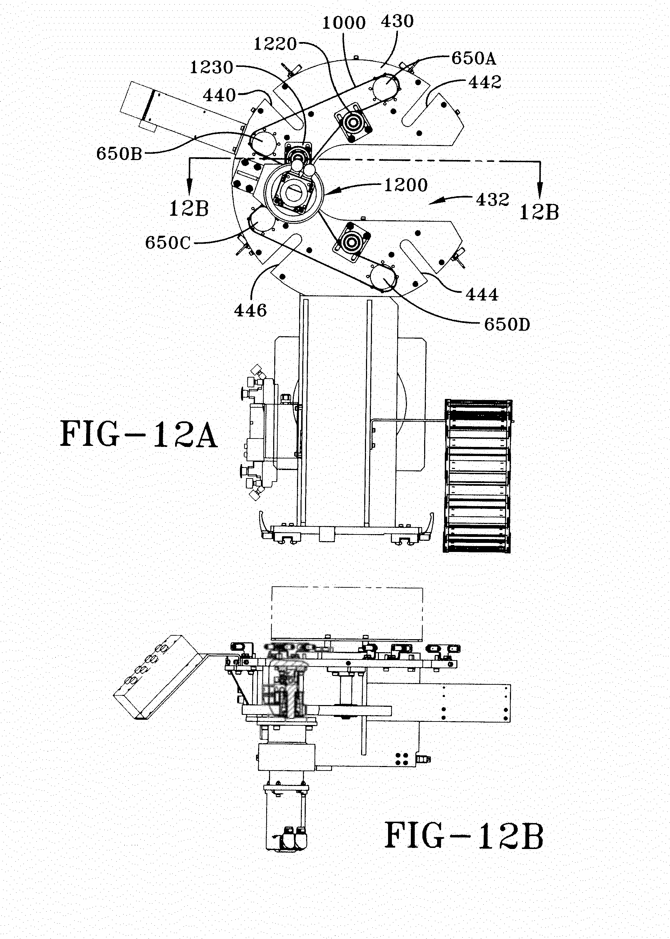

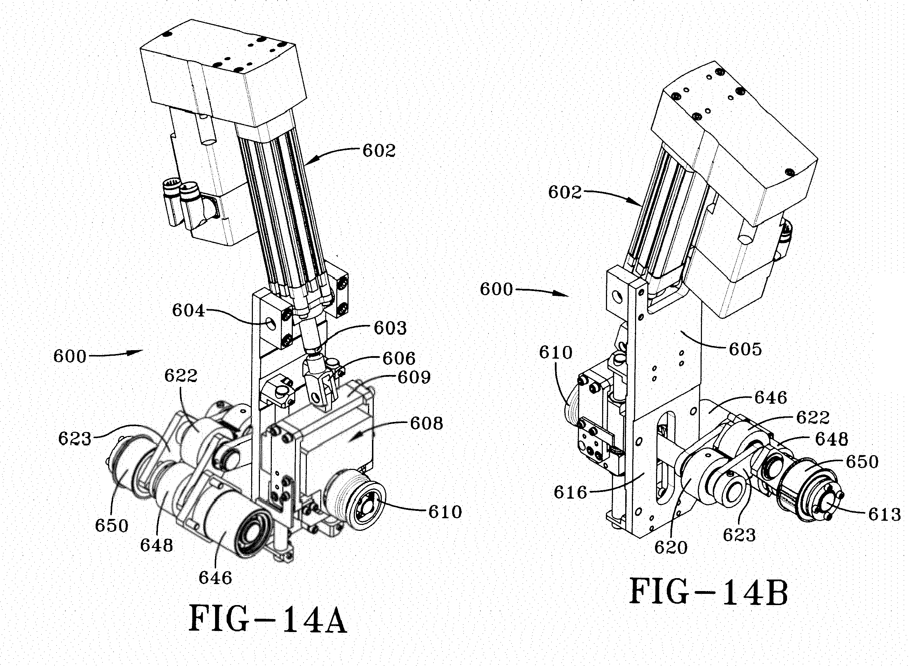

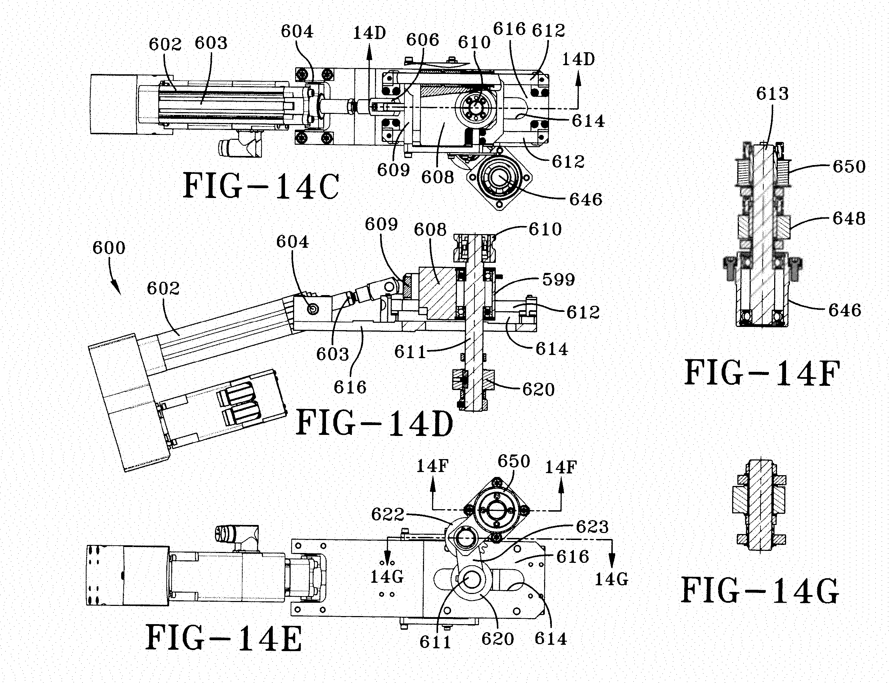

A C shaped member 430 is mounted to the second support plate 420 as shown in figure 11. The C shaped member 430 has an opening 432. As shown in Fig. 12A, the C shaped member has at least three, preferably four spaced apart slots 440, 442, 444, 446. The slots 440, 442, 444, 446 receive a bead holder unit 600 therein. Each bead holder unit 600 has a mounting plate 616 which is affixed to the C shaped member 430 with fasteners as shown in Fig. 11. Each mounting plate 616 has an elongated slot 614 which aligns with one of the respective slots 440, 442,444, 446 that the bead holder is mounted in. A slidable shoe 608 is slidably mounted to the mounting plate 616. The lower surface of the slidable shoe 608 is slidably mounted on two opposed, parallel rails 612 for sliding along the longitudinal axis of the slot 616. The front end 609 of the slidable shoe is mounted to a linear actuator 602, which has a slidable piston 603 which is received within pneumatic chamber 602. The first end of the piston 603 is also mounted in stationary guide block 604 which the piston slides therethrough. When the pneumatic actuator is actuated, the piston slides out from its chamber and slides the shoe 608 along the mounting plate in the direction of the longitudinal axis of the slot 614. The slot 614 is oriented so that the slot 614 is aligned in a radial direction towards the centerpoint of the C shaped member. The shoe slides on rails 612. Housed within the shoe is a rotatable shaft 611. The rotatable shaft has a first end having a bead support wheel 610 mounted thereon. The bead support wheel 610 has an outer groove for receiving the bead. As shown in Fig. 14D, the rotatable shaft 611 extends though the slot 614 of the mounting plate and the slot 440 of the C shaped member. The rotatable shaft 611 has a second inner end having a slave wheel 620 mounted thereon. As shown in Fig. 14B, the slave wheel 620 is coupled to an intermediary wheel 622 via a linkage 623. As shown in Fig. 14A, a drive wheel 648 rotates the intermediary wheel 622 which rotates the slave wheel, which rotates the shaft 611 which rotates the bead support wheel 610. The shaft 611 is supported by bearing housing 599. Thus, the shoe slides each bead support wheel into engagement with the annular bead ring, so that the bead is held and rotated by the bead support wheels 610.

### Bead Holder Drive Mechanism

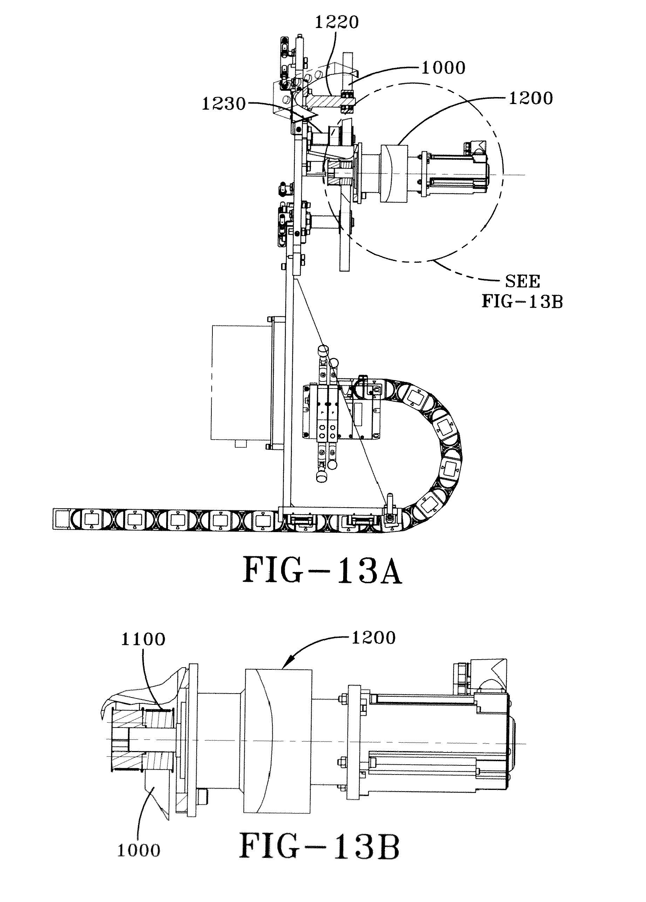

The drive wheel 648 is mounted on a rotatable shaft 613 as shown in Figure 14F. The drive wheel 648 rotates with shaft 613. A first end of the shaft 613 has a bearing housing 646 which is mounted to the C shaped member as shown in Fig. 11. The shaft has a belt drive wheel 650 mounted on the interior end of the shaft. As shown in Fig. 13A, a belt 1000 is received about the circumference of a first wheel 650A, a second wheel 650B, a third wheel 650C and fourth wheel 650D. Rotation of the first wheel 650A causes the bead support wheel 610A to rotate. The belt 1000 is also received about a second wheel 650B. Between the third wheel and fourth wheel, the first belt 1000 is received about a belt drive chuck 1100 of an electric motor 1200. The electric motor drives the belt 1000, causing rotation of wheels 650A, 650B, 650C and 650D, which in turn causes rotation of wheels 610A, 610B, 610C and 610D, respectively. The belt 1000 is also received about one or more rotatable guide wheels 1220, 1230.

### System operation

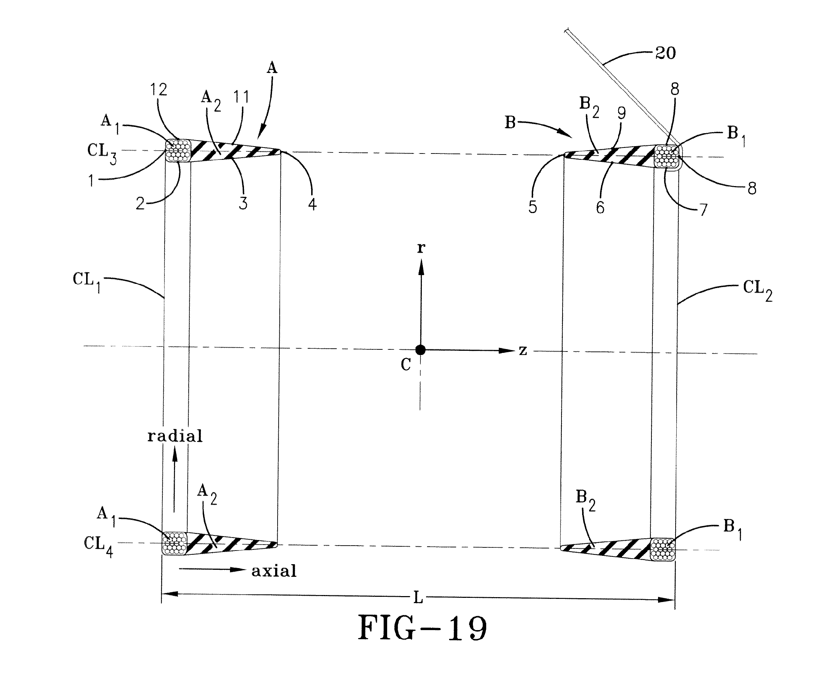

The ply wrapping apparatus of the invention can form a first stage tire carcass as shown in Figures 1 through 4. The first stage tire carcass is cylindrical in shape with bead cores A, B located at the ends of the cylinder as shown in Figure 19. A strip of ply 20 is looped completely around and inside both of the beads forming the tire carcass of Figure 3. The bead cores are spaced apart an axial distance L, and the bead cores are aligned in parallel relationship to each other. The distance L is determined by the tire designer, and depends upon the specific tire construction characteristics. An optional apex may be joined to the bead core. The apex is typically triangular in shape, and is positioned so that each triangle tip 4,5 is located axially inward of the bead core. The term "bead" used herein means bead core with or without an apex.

In order to form the first stage tire carcass, a first and second bead A, B are each mounted in the bead holder mechanisms 400A, 400B. The bead holder mechanisms are spaced apart so that the beads are spaced an axial distance L from each other. The beads A, B are placed in a parallel relationship to each other, with the centers of each bead in axial alignment with respect to each other. The bead holder's slidable shoe 608 is actuated radially outward to engage and hold a respective bead. Next, the rotatable member 200 is rotated. As the rotatable member 200 is rotated, the spool mechanism 300 is rotated around its axis in a circular fashion. The rotatable member is positioned adjacent each bead core so that the rotatable member passes through or inside each bead during its rotation. With each rotation of the rotatable member 200, the spool mechanism releases a ply strip 20 that wraps around each bead core, wherein each winding extends primarily in the axial direction about each bead A, B forming a first winding or loop. The strips are aligned in an axial direction and parallel with respect to each other with each winding.

As shown in Figure 19, a cylindrically shaped first stage tire carcass is shown, with two spaced apart beads A, B in parallel relationship to each other. The cylindrical axis or center axis runs through the center of the first stage tire carcass. As used herein, "axial" means in the direction of the longitudinal axis of the first stage tire carcass. "Axially inner" means in an axial direction towards the center C of the carcass, inward of the carcass outer ends Cl1 and Cl2, and "axially outer" means in an axial direction outward of the carcass outer ends.

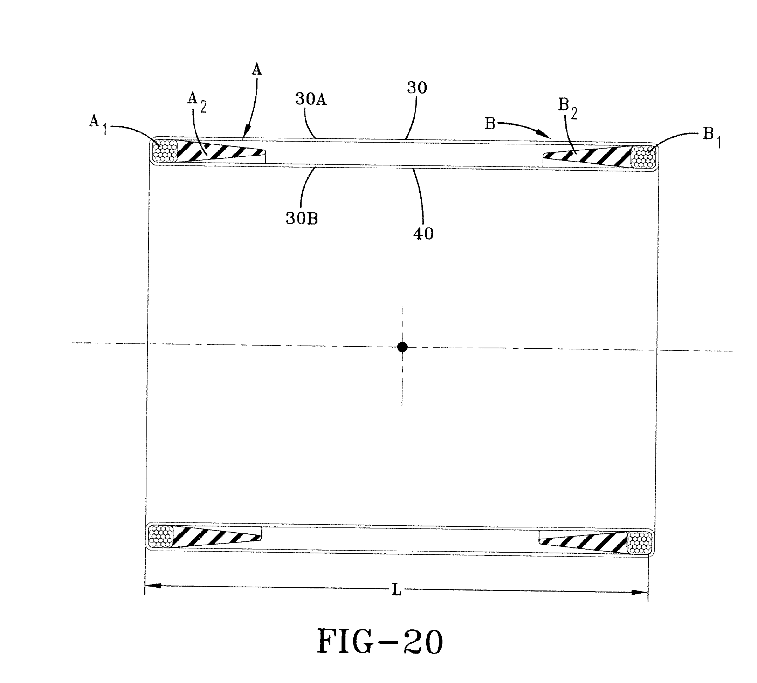

The ply strip winding 30 forms a radially outer portion 30A and a radially inner portion 30B that are spaced apart in parallel relationship. If each bead core A, B includes an apex A2, B2, then the radially outer portion 30A partially or fully engages each bead radially outer surfaces 10, 11 of each bead apex A2, B2 as shown in Fig 20. The radially outer ply winding 30A also engages the axially outer surface 1, 8 of each bead core A1, B1. The radially inner ply winding 30B partially or fully engage the radially inner surface 3, 6 of each bead apex A2, B2.

If the beads A, B do not include the apexes A2, B2, the ply winding wraps around the axially outer portion of each bead core and the radially outer and radially inner portion of each bead core. The ply winding does not fully wrap around each bead core, omitting the axially inner portion of each bead core.

The ply strip is continuously wound 30, as the bead are rotationally indexed so that the ply strip completely covers both beads, forming a first stage cylindrically shaped carcass as shown in Figure 3. The ply strips are be wound in such a manner that they are parallel to each other, and extend in an axial direction. The ply strips are wound so that they are radial with respect to the bead. Figure 2 illustrates that the ply winding results in two layers 30A, 30B of ply that are wrapped around the beads and are in parallel relationship to each other. When the carcass is formed into a torus shape during the second stage tire building process, the ply strips will extend in a radial direction from the bead to the tread.

If two spool mechanisms are used as shown in Figure 4, two windings of ply will occur for each rotation of the rotatable member.

In another embodiment, the rotatable member may be a complete circle, with a portion of the circle being capable of being open or closed.

## Claims

1. A ply making apparatus comprising:
a) a support frame;
b) a rotatable member mounted to the support frame, wherein the rotatable member further includes a spool mechanism for winding a strip of ply;
c) a first and second bead support holder located adjacent each other, wherein the second bead holder is configured to hold a second bead and the first bead support holder is configured to support a first bead in parallel relationship and axial alignment with respect to the second bead held by the second bead holder; and
wherein the rotatable member is positionable inside each bead.

2. The ply making apparatus of claim 1 wherein the rotatable member is C shaped, and, optionally, wherein the rotatable member has a removable bridge for bridging a gap of the C shaped member.

3. The ply making apparatus of claim 1 or 2 wherein each bead holder is configured to rotate its respective bead, preferably in synchronization with the rotation of the opposite respective bead of the other bead holder.

4. The ply making apparatus of at least one of the previous claims wherein the support frame has an upper portion and a lower portion, wherein the upper portion is slidable in a first direction relative to the lower portion and, optionally, wherein the rotatable member is mounted to the upper portion.

5. The ply making apparatus of at least one of the previous claims wherein the rotatable member further comprises a second spool mechanism.

6. The ply making apparatus of at least one of the previous claims wherein each bead holder is slidably mounted in a second direction and wherein the second direction is transverse to the first direction.

7. The ply making apparatus of at least one of the previous claims wherein each bead holder has a C shaped member, and, optionally, wherein the C shaped member is configured such that it does not rotate.

8. The ply making apparatus of at least one of the previous claims wherein each bead holder has one or more actuators and wherein each actuator is slidable in a radial direction.

9. The ply making apparatus of claim 8 wherein the actuator is a shoe slidable in the radial direction and, optionally, wherein the shoe further includes a rotatable wheel or a rotatable wheel driven by a belt.

10. A method of making a tire carcass, the method comprising the steps:
a) providing a first and second bead, at least one or both of the beads optionally comprising an apex;
b) aligning the first and second bead in parallel relationship to each other and aligning the centers of each bead on a central axis;
c) winding a strip of ply about the first and second bead so that the strip of ply extends between the beads in parallel relationship to the central axis forming a first stage tire carcass having two layers of ply and optionally further comprising the step of shaping the first stage tire carcass into a toroid.

11. A method of making a tire carcass, the method comprising the steps:
a) providing a rotatable member mounted to a support frame, wherein the rotatable member further comprises a spool of ply strip;
b) providing a first and second bead located adjacent the rotatable member wherein the first and second beads are placed in parallel relationship and axial alignment with respect to each other;
c) rotating the rotatable member through and around the first and second bead while winding the strip of ply around and through the opposed beads.

12. The method of claim 10 or 11 further comprising the step of rotationally indexing the first and second bead, or rotationally indexing the first and second bead while winding the strip of ply.

13. The method of claim 10, 11 or 12 wherein the rotatable member is C shaped.

14. A method of making a tire carcass, the method comprising the following steps:
a) providing a first and second bead having axially outer edges;
b) aligning the first and second bead in parallel relationship to each other, and aligning the centers of each bead on a central axis;
c) winding a strip of ply about the axially outer edge of the first bead, then extending the strip of ply in the axial direction towards the second bead, wrapping the strip around the axially outer edge of the second bead, and then extending the strip of ply in the axial direction towards the first bead to form a first winding;
d) rotationally indexing the first and second bead in unison, and
e) winding the strip of ply in a second winding as described in step c), wherein the second winding is located adjacent the first winding.

15. A method of making a tire, the method comprising the steps:
a) providing a first and second bead;
b) aligning the first and second bead in parallel relationship to each other, and aligning the centers of each bead on a central axis;
c) winding a strip of ply about the first and second bead so that the strip of ply extends between the beads in parallel relationship to the central axis;
d) rotationally indexing the beads in unison;
e) repeating steps c and d until a first stage tire carcass having two layers of ply is formed;
f) forming the first stage tire carcass into a torus shaped carcass;
g) applying a belt layer and tread to form a tire;
h) vulcanizing the tire in a mold.
